(19) Europäisches Patentamt
European Patent Office
Office européen des brevets

(11) Publication number: **0 113 237**
**B1**

(12) **EUROPEAN PATENT SPECIFICATION**

(45) Date of publication of patent specification: **25.11.87**

(51) Int. Cl.$^4$: **G 09 F 9/30,** G 02 F 1/33, G 02 F 1/17

(21) Application number: **83307818.1**

(22) Date of filing: **21.12.83**

(54) **Method for manufacturing a multicolour filter and a multicolour display device.**

(30) Priority: **22.12.82 JP 233933/82**
**22.12.82 JP 233934/82**
**12.04.83 JP 64117/83**

(43) Date of publication of application:
**11.07.84 Bulletin 84/28**

(45) Publication of the grant of the patent:
**25.11.87 Bulletin 87/48**

(84) Designated Contracting States:
**CH DE FR GB LI**

(56) References cited:
**EP-A-0 041 184**
**DE-A-3 113 041**
**DE-A-3 234 110**
**DE-A-3 321 468**
**GB-A-1 474 411**
**US-A-4 240 716**

**IBM TECHNICAL DISCLOSURE BULLETIN, vol.22, no.4, September 1979; A.F.DIAZ, K.K.KANAZAWA: "Improved Electrical Properties of Pyrrole Polymer", page 1639**

(73) Proprietor: **SEIKO INSTRUMENTS INC.**
**31-1, Kameido 6-chome Koto-ku**
**Tokyo 136 (JP)**

(72) Inventor: **Suginoya, Mitsuru**
**c/o Seiko Instruments & Electronics Ltd.**
**31-1, Kameido 6-chome Koto-ku Tokyo (JP)**
Inventor: **Kamamori, Hitoshi**
**c/o Seiko Instruments & Electronics Ltd.**
**31-1, Kameido 6-chome Koto-ku Tokyo (JP)**
Inventor: **Sano, Yutaka**
**c/o Seiko Instruments & Electronics Ltd.**
**31-1, Kameido 6-chome Koto-ku Tokyo (JP)**
Inventor: **Terada, (born Shinozuka), Yumiko**
**c/o Seiko Instruments & Electronics Ltd.**
**31-1, Kameido 6-chome Koto-ku Tokyo (JP)**
Inventor: **Iwasa, Koji**
**c/o Seiko Instruments & Electronics Ltd.**
**31-1, Kameido 6-chome Koto-ku Tokyo (JP)**

(74) Representative: **Caro, William Egerton**
**J. MILLER & CO. Lincoln House**
**296-302 High Holborn**
**London WC1V 7JH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 113 237 B1**

**Description**

This invention relates to methods of manufacturing multicolour filters and multicolour display devices.

Conventionally a monochrome filter which is made by diffusing metal atoms into a glass substrate has been widely used for cameras. Recently a multicolour filter having a fine pattern has been required for image camera tubes. A multicolour filter is conventionally made by printing a multicolour pattern onto a glass substrate or by photolithography where a single coloured layer is formed on a glass substrate and then exposed to ultra violet light through a mask to be etched in a desired pattern by photolithography. This process is repeated for different colours so that a fine multicolour pattern is obtained. Quite recently a multicolour display device comprising, in combination, a liquid crystal display device and a multicolour filter having a fine pattern has been developed.

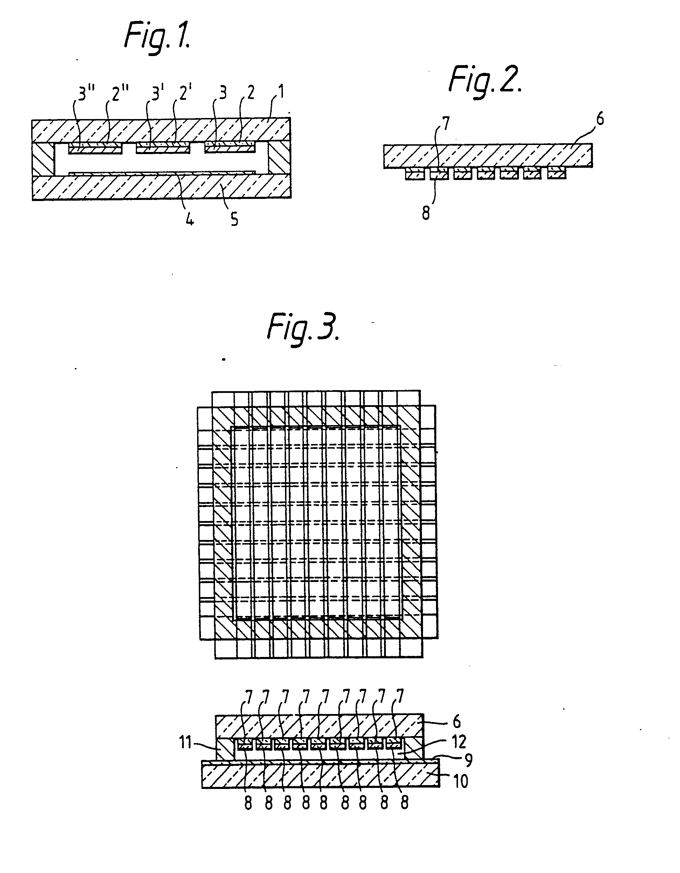

Figure 1 shows a multicolour display device having a multicolour filter. The multicolour display device has a transparent substrate 1, display electrodes 2, 2′, 2″ each consisting of a transparent electroconductive film on which a figure or a letter is patterned, respective colour filters 3, 3′, 3″ formed on the surface of the display electrode 2, 2′, 2″, a transparent counter electrode 4 and a transparent counter substrate 5. A liquid crystal or electrochromic material serving as an optical shutter is sandwiched between the substrates 1, 5 and is opened or closed by a voltage applied between the display electrodes and the counter electrode. The colour filters 3, 3′, 3″ are of different colours. When a voltage is selectively applied between the corresponding display electrodes 2, 2′, 2″ and the counter electrode 4, a multicolour display device is produced.

A multicolour display device of this type is relatively simple to manufacture and free colour tones can easily be obtained. However, a multicolour filter having a fine pattern is required and its method of fabrication has to be relatively easy. However, the conventional printing method of making a multicolour filter does not achieve a sufficiently fine pattern although it is relatively easy. The conventional photolithographic method of making a multicolour filter requires precise alignment of the mask during exposure to ultra violet light and is very complicated although it produces a fine pattern.

In DE—A—3113041, there is disclosed a method of manufacturing a multicolour filter comprising the steps of forming a pattern of a plurality of non-overlapping electroconductive layers electrically insulated from each other on a non-conductive surface of a substrate and forming different coloured layers on different electroconductive layers.

The present invention seeks to provide a method of manufacturing a multicolour filter having a highly accurate and fine pattern with ease.

According to one aspect of the present invention, such a method is characterised in that a voltage is applied to a first group of one or more selected electroconductive layers in the presence of a polymer to electrodeposit a layer of polymer of a first colour on each selected layer, and, after completion of such first colour polymer deposition, a voltage is applied to a second group of one or more selected different electroconductive layers in the presence of a polymer to electrodeposit a layer of a second colour on each such selected different layer.

In one embodiment, each coloured layer is composed of a mixture of an electrodeposited polymer and appropriate colouring matter which is electrolytically deposited from a solution containing the polymer and the appropriate colouring matter. Said colouring matter may be water insoluble and may be a pigment, a dispersion dye or a solvent dye.

In another embodiment, each coloured layer is formed by electrodepositing the polymer on the electroconductive layer from a solution containing the polymer and thereafter dyeing the electrodeposited polymer in a solution containing a dye.

Each electroconductive layer may be formed substantially of tin oxide or indium oxide and each coloured layer is anodically deposited from a solution including a negatively charged polymer. Thus the negatively charged polymer may be a polyester resin, an acrylic resin or a melamine resin.

The method according to the present invention may be characterised in that the substrate is immersed in an electrodeposition bath containing polymer resin and the first colouring matter during application of a voltage to the first group of electroconductive layers, and is immersed in another electrodeposition bath containing polymer resin and the second colouring matter during application of a voltage to the second group of electroconductive layers.

Alternatively, the method according to the present invention may be characterised in that the substrate is immersed in an electrodeposition bath containing polymer resin during application of a voltage to the first group of electroconductive layers, the electrodeposited polymer resin layer is dyed to a first colour, voltage is applied to the second group of electroconductive layers and the second electrodeposited polymer resin layer is dyed to the second colour different from the first colour.

According to another aspect of the present invention there is provided a method of manufacturing a multicolour display device from a multicolour filter manufactured by a method according to the invention, in which the electroconductive layers form a pattern of display electrodes characterised by forming a counter electrode on a surface of a second substrate, and sandwiching a display material between said first substrate and said second substrate, said display material serving, in operation, as a light shutter controlled by the voltage applied between said display electrodes and the counter electrode. Said display material may be a twisted nematic field effect mode liquid crystal material or a negative type guest-host

liquid crystal material or a dynamic scattering mode liquid crystal material or an electrochromic material.

In the device disclosed in US—A—4240716, only one colour is involved for each cell, and the electrodeposition referred to is purely temporary during application of a driving voltage.

The invention is illustrated, merely by way of example, in the accompanying drawings, in which:—

Figure 1 shows schematically a multicolour display device using a multicolour filter;

Figure 2 is an embodiment of a multicolour filter manufactured by a method according to the present invention; and

Figure 3 is an embodiment of a multicolour display device manufactured by a method according to the present invention.

One method of electrodepositing a polymer on an electrode is by polymerising a monomer on the electrode electrochemically. It has been reported that a polymer coating has been obtained by polymerising various vinyl compounds on an iron plate electrochemically ("Metal Surface Technology" Vol. 19, No. 12, 1968).

Recently, research on producing an electroconductive polymer such as poly(2,5-pyrrole) or poly (2,5-thienyline) by electrochemically polymerising pyrrole or thiophene on an electrode has been actively undertaken. The method for electrochemically polymerising a monomer directly, however, has drawbacks: namely it is relatively inefficient and lacks the option of colour since the film obtained is already coloured. Another method of electrodepositing a polymer is to insolubilise a polymer from a polymer solution on an electrode to which a voltage is applied. By way of example, an electrodeposition coating method has been known in industrial fields, in which a coloured layer is electrodeposited on a metal electrode by immersing the electrode in a polymer solution in which a pigment is scattered. This electrodeposition coating method is used, for example, for precoating automobile bodies etc. The principle of this method is as follows: hydrophilic groups such as carboxyl groups are introduced into the polymer, the carboxyl groups are neutralised and solubilised with inorganic alkali, organic amine etc., and when the electrode is immersed in the thus produced polymer solution and a voltage is applied, carboxyl-anion dissociation takes place in solution and the polymer is moved towards the positive electrode to react with a proton produced by electrolysis of water on the positive electrode so that the polymer is insolubilised and deposited. Namely the reaction shown by the following equation takes place at the positive electrode:

$$2H_2O \rightarrow 4H + O_2 \uparrow + 4e^-$$

$$COO^- + H^+ \rightarrow COOH \quad \text{(deposition)}$$

Conversely, when a basic group (e.g. a polyamine) is used for the hydrophilic group to be neutralised and solubilised by acid, the polymer is deposited on the negative electrode. In the case of where the electrodeposited polymer is electrically non-conductive as the electrode is coated with polymer current flow is reduced which would be thought to prevent the electrode from being coated with more polymer. Actually, however, a complete coating of polymer can be obtained because of bubbles of oxygen evolved by the electrolysis of water. A polymer film so produced contains less water due to the effect of electroendosmosis and has a uniform thickness.

As a polymer for such electrodeposition, an addition compound of a natural drying oil with maleic acid, an alkyd resin incorporating a carboxyl group, an addition compound of epoxy-resin with maleic acid, a polybutadiene resin incorporating a carboxyl group, a copolymer of acrylic acid or methacrylic acid with its ester, etc. may be used. Other polymers of organic compounds having other functional groups may be sometimes incorporated into a polymer to be electrodeposited. These polymers are selectively used according to the desired characteristics of a coloured layer to be produced. For example, if a transparent coloured layer is required, an acrylic polymer or polyester polymer is preferred. Methods for manufacturing electrodeposited polymers vary according to the types of polymer. For example, acrylic polymers are manufactured by a copolymerisation of acrylic acid or methacrylic acid having a carboxyl group with acrylic acid ester or methacrylic acid ester having a neutral group. In this case, the ratio of the carboxyl group to the neutral group is important: if the amount of the carboxyl group is too large, the insolubilisation of the electrodeposited polymer layer is insufficient and if it is too small the solubility when neutralised is insufficient. OH groups can be incorporated in order to increase the solubility. After the decision of the composition of the monomer, the polymerisation is usually effected using a normal radical polymerising agent, in hydrophilic solvent such as isopropyl alcohol, n-butyl alcohol, tert-butyl alcohol, methyl cellosolve, ethyl cellosolve, isopropyl cellosolve, butyl cellosolve, diethylene glycol methyl ether, diethylene glycol ethyl ether, or diacetone alcohol.

The polymer layer obtained by electrodeposition cannot be used by itself as a coloured layer and it must be coloured. In general it is coloured using a polymer solution in which a pigment is dispersed. The usable pigments are titanium oxide, barium sulphate, talc, asbestin, china clay, red iron oxide, yellow iron oxide, strontium chromate, basic silicide lead chromate, phthalocyanine blue, phthalocyanine green, hansa yellow, carbon black etc. Such pigment is charged in an aqueous solution of the polymer and absorbs the polymer on its surface so that it is electrophoretically deposited together with the polymer and incorporated in the electrodeposition layer.

Such pigment generally decreases transparency of the polymer layer. However, some pigments especially organic pigments do not decrease the transparency of the polymer layer.

Alternatively a dye can be used for improving the transparency of the polymer layer. For electrodepositing a dye with the polymer, dye molecules should be electrified and electrophoretically deposited. In the case of a soluble dye, a dissociated dye ion serves as the current carrier but this causes increase in current and thickness and non-uniformity of the polymer layer. Although insoluble dyes ordinarily coagulate in water, the polymer is regarded as a kind of soap having hydrophobic groups and hydrophilic groups which disperse to some extent the organic dye and can be fined down into powder by being combined with a suitable solvent and can be electrodeposited together with the polymer. In this case, the electrodeposition velocities of the dye and the polymer should be substantially the same and can be controlled by the composition of the solution.

A water soluble dye can be utilised for making a coloured layer by dyeing the polymer layer after electrodeposition. First, a transparent electroconductive film of tin oxide, indium oxide etc. is formed on a glass substrate by spray coating, spattering etc. and then the film obtained is patterned by chemical or dye etching. The portions of the pattern of the transparent electroconductive film to be identically coloured are selected and, as the anodes, in a neutralised aqueous solution of copolymer of acrylic acid or methacrylic acid with its ester a polymer layer is electrodeposited on those portions of the transparent electroconductive film. The electrodeposited polymer layer is washed, cured and dyed by a cation dye for acrylic resin, for example, Aizen, Cathilon, Diacryl, Sumiacryl, Astrazon, Basacryl, Deorene, Maxilon, Sevron etc. (Manual of Dyes). By repeating the operation abovementioned for different portions of the transparent electroconductive film, a coloured pattern with excellent transparency can be formed on the glass substrate. If other transparent polymers are used, a dye selected as suitable for the polymer used can show similar effect. For instance, when a polyester is used, a dispersion dye may be appropriate.

Methods according to the present invention of manufacturing multicolour filters and multicolour display devices will now be described in conjunction with the following Examples.

Example 1

Figure 2 is an embodiment of a multicolour filter manufactured by a method according to the present invention. A display substrate 6 made of a transparent material has a transparent tin oxide electroconductive film or layer formed thereon by spray coating. The transparent electroconductive layer is patterned in strips by etching to obtain display electrodes 7.

The following is the composition of S-Via ED-3000 (Trade Mark) manufactured by Sinto Coating Co. Ltd.):

| Material | wt% |
|---|---|
| soluble polyester resin<br>soluble melamine resin | 70 wt% |
| butylcellosolve<br>ethylcellosolve<br>n-butanol | 30 wt% |

The following is the composition of an electrodeposition bath including S-Via ED-3000:

| Material | relative weight ratio |
|---|---|
| S-Via ED-3000 | 5 |
| water | 120 |
| methylcellosolve | 15 |
| solvent dyes | x |

The solvent dyes employed are soluble hydrophilic solvent dyes preferably with metal complex salt structure and with extremely excellent light resistance. One such solvent dye (Aizen Spilon, Oleosol Fast, etc.) has the following structure.

Cr complex salt of 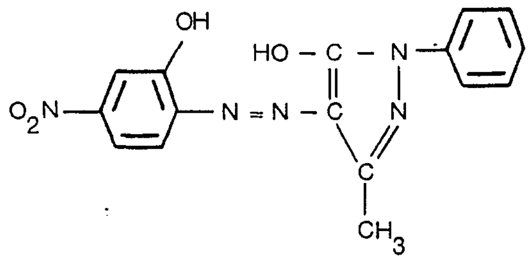

Colour Index No.: Solvent Red 8

The electrodeposition bath was formed as follows: S-Via ED-3000 was dissolved in water; the solvent dyes were dissolved in methylcellosolve, the amount of solvent dyes being freely chosen within a range not exceeding the solubility of the solvent dyes in methylcellosolve, and the methylcellosolve in which the solvent dyes were dissolved added to the aqueous solution and uniformly dispersed. At this time, although the methylcellosolve serves as a dispersion solvent, an increase in the amount of additives to the methylcellosolve or an increase in the number of carbon atoms of the alkyl group of the cellosolve causes an increase in the thickness and uniformity of the subsequently deposited polymer layer.

The display substrate 6 on which the display electrodes were formed was immersed in the electrodeposition bath made as described above. A group of display electrodes to be coloured identically was selected and a voltage of 10 V was applied for 3 minutes using the selected group of display electrodes as the positive electrode. A large current flowed immediately after the application of the voltage, and the current gradually reduced approaching zero. After the application of the voltage the display substrate 6 was extracted and washed sufficiently to remove the solution on the display electrodes 7 to which no voltage was applied. When the display substrate had been dried after washing, it was found that a coloured layer with excellent transparency was formed on the group of display electrodes to which the voltage had been applied.

The polyester resin and the melamine resin in the electrodeposited coloured layer were cured by condensation reaction by heating. When the resins had been cured in air at 175°C for 30 minutes, the coloured layer was found to be completely cured. The film thickness of the coloured layer on this occasion was 1.5 μm.

The coloured layer was found to be a completely electrically non-conductive layer which could not have a further layer electrodeposited thereon nor could it be dyed further even when re-immersed in the electrodeposition bath. Second and third coloured layers were formed by repeating the process of selecting a second group of display electrodes to be coloured identically, electrodepositing a coloured layer on these display electrodes in a similar electrodeposition bath in which solvent dyes of different colour had been dispersed and curing.

In this embodiment, colour filters 8 of 200 μm width in the order of red, blue and green were manufactured by the following extremely simple method:

Patterning process → electrodeposition process of a red filter → curing process → electrodeposition process of a blue filter → curing process → electrodeposition process of a green filter → curing process.

The multicolour filter so produced had no colour shear, uniformity and the property of not being damaged by acid, alkali, various organic solvents nor hot water. The metal complex salt solvent dyes used were found to be extremely stable in the coloured layers and had excellent light resistance showing more than a 95% initial light resistance test in which a carbon arc was used as the light source.

A multicolour filter manufactured by this method was found to be usable for a colour image camera tube etc.

Example 2

The multicolour filter manufactured and described in Example 1 was incorporated in a liquid crystal display device to constitute a multicolour display device. As shown in Figure 3, the colour filters 8 were formed on the display electrodes 7 as described in Example 1. A plurality of transparent counter electrodes 9 (only one shown) were formed on the surface of a transparent counter substrate 10. The display substrate 6 was disposed opposite to the counter substrate 10 with a spacer 11 therebetween. The display electrodes faced the counter electrodes 9 and the direction of the strips of the two were at right angles. A TN-FEM (twisted nematic field effect mode) liquid crystal display material 12 was disposed in the space between the substrates to form a display cell. When a voltage was applied between the display electrodes 7 and the counter electrodes 9, and the display cell was sandwiched between a polariser and an analyser whose transmission axes were parallel, the colours of the transparent colour filters 8 were displayed when viewing the display substrate 6 or the counter substrate 10. The display cell appeared black when no voltage was applied. When light was incident on the counter substrate 10, colours of the colour filter 8 were vividly displayed due to the excellent transparency of the display cell.

The multicolour display device of this example had a fine colour filter and display quality was excellent notwithstanding its simplicity. The multicolour display device was found to be usable as a colour graphic display device of the matric drive type.

Example 3

A negative type guest-host liquid crystal material using black dichroic colouring matter was used as the display material 12 in the multicolour display device of Example 2 and a white material (white ceramic) served as the display substrate 6. When a voltage was applied between the display electrodes 7 and the counter electrodes 9 and when viewing from the direction of the transparent counter substrate 10 through the polarising plate, the colours of the colour filter 8 were clearly displayed. When no voltage was applied, the colour of the dichroic colouring matter, namely black, was displayed.

Example 4

A DSM (dynamic scattering mode) liquid crystal material was used as the display material 12 in the multicolour display device of Example 2 and an aluminium layer on the display substrate 6 was patterned by a mask evaporation technique to form the display electrodes 7. When a voltage was applied between the display electrodes 7 and the counter electrodes 9, and when viewing from the direction of the transparent counter substrate 10, the liquid crystal material was in a light scattering state, and the colours of the colour filters 8 appeared milky white. When no voltage was applied, the light scattering state disappeared and the display appeared dark. To make a DSM liquid crystal material display efficiently in the light scattering state an ionic current to some extent should flow but the high electrical resistance of the colour filters 8 disturbs the ionic current flow. Accordingly, transparent electrodes which coincide as far as pattern is concerned with the display electrodes 7 must be provided on the colour filters 8. These transparent electrodes serve as electrodes for applying the voltage to the DSM liquid crystal material whereby drive voltage is reduced and a fine colour display is achieved.

Example 5

A coating of POWERMITE 3000-10 (Trade Mark) manufactured by Nippon Paint Co. Ltd. and having the following composition was used in an electrodeposition bath:

| Material | wt% |
|---|---|
| soluble acrylic resin<br>soluble melamine resin | 60 wt% |
| butylcellusolve<br>isopropyl alcohol | 40 wt% |

The electrodeposition bath itself had the following composition:

| Material | relative weight ratio |
|---|---|
| POWERMITE 3000-10 | 10 |
| water | 120 |
| ethyleneglycol | 20 |
| dispersion dyes | x |

Dispersion dyes on the market often contain an anionic dispersion agent. Since a dispersion agent is ionised in the electrodeposition bath and this causes current to be increased it is desirable that the electrodeposition bath does not contain any dispersion agent. To avoid this problem the electrodeposition bath was made as follows: the dispersion dyes were uniformly dispersed in ethyleneglycol with the range of $x < 1.5$ and added to the aqueous solution of POWERMITE 3000-10. A dispersion dye having the following structure can, for example, be used:

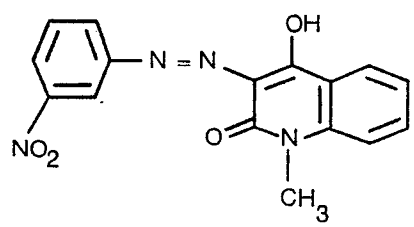

Colour Index No.: Dispersion Yellow 5

A multicolour liquid crystal display device was in a similar manner to that described in Example 2 and was found to have similar advantages.

Example 6

The composition of the electrodeposition bath of Example 1 was modified as follows:

| Material | relative weight ratio |
|---|---|
| S-Via ED-3000 | 20 |
| water | 120 |
| pigment | x |

The electrodeposition bath was made as follows: pigment was added to the S-Via ED-3000 within the range of x <10 and uniformly dispersed by kneading, ultrasonics etc. Next, water was added. Since the polymers in the electrodeposition bath were of high density, a coloured layer 2.0 μm was produced using the electrodeposition bath. Organic pigments such as phthalocyanine blue or phthalocyanine green are preferred because they maintain the transparency of the coloured layer.

Example 7

The colour filter 8 described in Example 1 was fabricated as follows: A display substrate made of transparent material had a tin oxide transparent electroconductive film or layer formed thereon by spray coating. The transparent electroconductive layer was patterned to produce a plurality of parallel strip display electrodes by etching. The display substrate on which the display electrodes had been formed as above was immersed in an electrodeposition bath made of an aqueous solution of 10% by weight of polyester melamine resin (S-Via ED-3000). A first group of display electrodes to be coloured identically were selected. A 10 to 100 V voltage was applied for a few minutes to the selected electrodes which form an anode in the electrodeposition bath. Next the display substrate was removed from the electrodeposition bath and washed. During any washing polymer deposited on the electrodes to which no voltage was applied was washed off, but the polymer deposited on the selected electrodes to which a voltage was applied could not be washed off because it was insoluble. The display substrate was then dried and it was found that a polymer layer with excellent transparency had been formed on the selected display electrodes.

A cation dye was used to dye the polyester layer because the electrodeposited polymer had an acidic carboxyl group. A dispersion dye for polyester resin could also be used. The display substrate was immersed in an aqueous solution of a cation dye (Diacryl: manufactured by Mitsubishi Kasei) of a desired colour to which acetic acid was added to give a pH between 3 and 5, and boiled until the desired colour density was achieved. Subsequently the substrate was cooled and washed. The polymer film deposited on the selected display electrodes was found to be dyed but the display electrodes with no polymer dye thereon were not dyed.

A melamine resin and carboxyl groups in the electrodeposited polymer layer were cured by a condensation reaction. The cured polymer layer was resistant to subsequent dye and therefore different coloured layers were formed on two other groups of selected display electrodes in the same manner as the first group of display electrodes were dyed. In this Example colour filters in the order of red, blue and green were formed on the strip display electrodes, the red coloured filters being formed first, next the blue colour filters and finally the green colour filters.

A multicolour display device was made in the same manner as Example 2 and was found to have similar properties.

Example 8

An aqueous solution of 0.3 mol/1KBr containing a benzyl viologen dibromide in which titanium oxide powder was dispersed as a white background was used as the display material in a multicolour display device according to the present invention. When electrochromic material is used as display material, a large current flows during display. Thus transparent electrodes whose patterns coincide with the patterns of the display electrodes 7 must be provided on the colour filters 8, the transparent electrodes serving as electrodes for applying a drive voltage to the display material. When the transparent electrodes on the colour filters are at negative potential and the counter electrodes are at positive potential and when viewing from the direction of the display substrate 6, the colours of the colour filters 8 and the purple of the benzyl viologen radical are mixed and displayed on the white background. On the other hand when the potential is reversed the viologen radical disappears and the colours of the colour filters 8 only are displayed. The

effect similar to Example 2 was achieved without any shear between the colour of the viologen radical and the colours of the colour filters 8.

**Claims**

1. A method of manufacturing a multicolour filter comprising the steps of forming a pattern of a plurality of non-overlapping electroconductive layers (7) electrically insulated from each other on a non-conductive surface of a substrate (6) and forming different coloured layers (8) on different electroconductive layers (7), characterised in that a voltage is applied to a first group of one or more selected electroconductive layers (7) in the presence of a polymer to electrodeposit a layer (8) of polymer of a first colour on each selected layer (7), and, after completion of such first colour polymer deposition, a voltage is applied to a second group of one or more selected different electroconductive layers (7) in the presence of a polymer to electrodeposit a layer (8) of a second colour on each such selected different layer (7).

2. A method as claimed in claim 1, characterised in that each coloured layer (8) is composed of a mixture of an electrodeposited polymer and appropriate colouring matter which is electrolytically deposited from a solution containing the polymer and the appropriate colouring matter.

3. A method as claimed in claim 2, in which said colouring matter is water-insoluble.

4. A method as claimed in claim 3, characterised in that said water-insoluble colouring matter is a pigment, a dispersion dye or a solvent dye.

5. A method according to claim 2, 3 or 4, characterised in that the substrate (6) is immersed in an electrodeposition bath containing polymer resin and the first colouring matter during application of a voltage to the first group of electroconductive layers (7), and is immersed in another electrodeposition bath containing polymer resin and the second colouring matter during application of voltage to the second group of electroconductive layers (7).

6. A method according to claim 2, 3, 4 or 5, characterised in that the solution includes polyester resin and melamine resin.

7. A method according to claim 2, 3, 4 or 5 characterised in that the solution includes acrylic resin and melamine resin.

8. A method according to claim 2, 3, 4, 5, 6 or 7 characterised in that the electrodeposited polymer is cured after each electrodeposition and before the next electrodeposition.

9. A method as claimed in claim 1, characterised in that each coloured layer (8) is formed by electrodepositing the polymer on the electroconductive layer (7) from a solution containing the polymer, and thereafter dyeing the electrodeposited polymer in a solution containing a dye.

10. A method according to claim 9 characterised in that the substrate (6) is immersed in an electrodeposition bath containing polymer resin during application of voltage to the first group of electroconductive layers (7), the electrodeposited polymer resin layer is dyed to a first colour, voltage is applied to the second group of electroconductive layers and the second electrodeposited polymer resin layer is dyed to the second colour different from the first colour.

11. A method according to claim 1, characterised in that each conductive layr (7) is formed substantially of tin oxide or indium oxide and each coloured layer (8) is anodically deposited from a solution including a negatively charged polymer.

12. A method according to claim 11 characterised in that the negatively charged polymer is a polyester resin, an acrylic resin or a melamine resin.

13. A method of manufacturing a multicolour display device from a multicolour filter manufactured by a method according to any preceding claim, in which the electroconductive layers form a pattern of display electrodes (7) characterised by forming a counter electrode (9) on a surface of a second substrate (10), and sandwiching a display material (12) between said first substrate (6) and said second substrate (10), said display material (12) serving, in operation, as a light shutter controlled by the voltage applied between said display electrodes and the counter electrode.

14. A method as claimed in claim 13, characterised in that said display material (12) is a twisted nematic field effect mode liquid crystal material or a negative type guest-host liquid crystal material or a dynamic scattering mode liquid crystal material or an electrochromic material.

**Patentansprüche**

1. Verfahren zur Herstellung eines Mehrfarbenfilters, bei dem auf einer nichtleitenden Oberfläche eines Substrates (6) ein Muster aus einer Vielzahl von elektrisch voneinander isolierten elektrischen leitenden Schicht (7) und auf unterschiedlichen elektrisch leitenden Schichten (7) unterschiedlich gefärbte Schichten (8) hergestellt werden, dadurch gekennzeichnet, daß an eine erste Gruppe einer oder mehrerer ausgewählter elektrisch leitender Schichten (7) in Gegenwart eines Polymers eine Spannung angelegt wird, um eine Schicht (8) aus Polymer einer ersten Farbe auf jeder ausgewählten Schicht (7) elektrolytisch abzuscheiden, und daß nach Abschluß der Abscheidung des Polymers der ersten Farbe an eine zweite Gruppe einer oder mehrerer ausgewählter unterschiedlicher elektrisch leitender Schichten (7) in

Gegenwart eines Polymers eine Spannung angelegt wird, um auf jeder dieser ausgewählten unterschiedlichen Schichten (7) eine Schicht (8) einer zweiten Farbe elektrolytisch abzuschieden.

2. Verfahren nach Anspruch 1, dadurch gekennzeichnet, daß jede gefärbte Schicht (8) aus einer Mischung eines elektrolytisch abgeschiedenen Polymers und eines geeigneten Färbungsstoffes zusammengesetzt ist, die aus einer Lösung abgeschieden wird, welche das Polymer und den geeigneten Färbungsstoff enthält.

3. Verfahren nach Anspruch 2, bei dem der Färbungsstoff wasserlöslich ist.

4. Verfahren nach Anspruch 3, dadurch gekennzeichnet, daß der wasserlösliche Färbungsstoff ein Pigment, ein Dispersionsfarbstoff oder ein Lösungsmittelfarbstoff ist.

5. Verfahren nach Anspruch 2, 3 oder 4, dadurch gekennzeichnet, daß das Substrat (6) in ein elektrolytisches Bad eingetaucht wird, das während des Anlegens einer Spannung an die erste Gruppe von elektrisch leitenden Schichten (7) ein Polymerharz und den ersten Färbungsstoff enthält, und während des Anlegens einer Spannung an die zweite Gruppe von elektrisch leitenden Schichten (7) in ein weiteres elektrolytisches Bad eingetaucht wird, das ein Polymerharz und den zweiten Färbungsstoff enthält.

6. Verfahren nach Anspruch 2, 3, 4 oder 5, dadurch gekennzeichnet, daß die Lösung Polyesterharz und Melaminharz enthält.

7. Verfahren nach Anspruch 2, 3, 4 oder 5, dadurch gekennzeichnet, daß die Lösung Acrylharz und Melaminharz enthält.

8. Verfahren nach Anspruch 2, 3, 4, 5, 6 oder 7, dadurch gekennzeichnet, daß das elektrolytisch abgeschiedene Polymer nach jeder elektrolytischen Abscheidung und vor der nächsten elektrolytischen Abscheidung ausgehärtet wird.

9. Verfahren nach Anspruch 1, dadurch gekennzeichnet, daß jede gefärbte Schicht (8) dadurch hergestellt wird, daß das Polymer aus einer polymerenthaltenden Lösung auf der elektrisch leitenden Schicht (7) abgeschieden und das elektrolytisch abgeschiedene Polymer danach in einer einen Farbstoff enthaltenden Lösung gefärbt wird.

10. Verfahren nach Anspruch 9, dadurch gekennzeichnet, daß das Substrat (6) während des Anlegens einer Spannung an die erste Gruppe von elektrisch leitenden Schichten (7) in ein Polymerharz enthaltendes elektrolytisches Bad eingetaucht, die elektrolytisch abgeschiedene Schicht aus Polymerharz auf eine erste Farbe eingefärbt, Spannung an die zweite Gruppe von elektrisch leitenden Schichten angelegt und die elektrolytisch abgeschiedene Schicht aus Polymerharz auf eine von der ersten Farbe verschiedene zweite Farbe eingefärbt wird.

11. Verfahren nach Anspruch 1, dadurch gekennzeichnet, daß jede leitende Schicht (7) im wesentlichen aus Zinnoxid oder Indiumoxid hergestellt und jede gefärbte Schicht (8) aus einer ein negativ geladenes Polymer enthaltenden Lösung anodisch abgeschieden wird.

12. Verfahren nach Anspruch 11, dadurch gekennzeichnet, daß das negativ geladene Polymer ein Polyesterharz, ein Acrylharz oder ein Melaminharz ist.

13. Verfahren zur Herstellung einer Mehrfarbenanzeigeeinrichtung aus einem Mehrfarbenfilter, das nach einem Verfahren gemäß den vorhergehenden Ansprüchen hergestellt ist, wobei die elektrisch leitenden Schichten ein Raster von Anzeigeelektroden (7) bilden, dadurch gekennzeichnet, daß auf einer Oberfläche eines zweiten Substrats (10) eine Gegenelektrode (9) hergestellt wird und zwischen dem ersten Substrat (6) und dem zweiten Substrat (10) ein Anzeigematerial (12) vorgesehen wird, das als Lichtblende dient, die durch eine zwischen die Anzeigeelektroden und dei Gegenelektrode angelegte Spannung gesteuert wird.

14. Verfahren nach Anspruch 13, dadurch gekennzeichnet, daß das Anzeigematerial (12) ein durch Feldeffekt angeregtes verdrilltes nemantisches Flüssigkristallmaterial, ein negatives Guest-Host-Flüssigkristallmaterial, ein dynamisches Streuzellen-Flüssigkristallmaterial oder ein elektrochromes Material ist.

**Revendications**

1. Procédé de fabrication d'un filtre multichrome comprenant les étapes de formation d'un dessin de plusieurs couches électroconductrices (7) ne se recouvrant pas, électriquement isolées les unes des autres, sur une surface non conductrice d'un support (6) et formation de couches colorées (8) différentes sur des couches électroconductrices (7) différentes, caractérisé en ce que l'on applique une tension à un premier groupe d'une ou plusieurs couches électroconductrices (7) choisies en présence d'un polymère pour déposer par électrodéposition une couche (8) d'un polymère d'une première couleur sur chaque couche (7) choisie et, après la fin de ce dépôt de polymère de première couleur, on applique une tension à un second groupe d'une ou plusieurs couches électroconductrices (7) différentes choisies en présence d'un polymère pour déposer par électrodéposition une couche (8) d'une seconde couleur sur chacune de ces couches (7) différentes choisies.

2. Procédé selon la revendication 1, caractérisé en ce que chaque couche colorée (8) est composée d'un mélange d'un polymère électrodéposé et d'une matière colorante appropriée qui est déposée par électrolyse à partir d'une solution contenant le polymère et la matière colorante appropriée.

3. Procédé selon la revendication 2, dans lequel ladite matière colorante est insoluble dans l'eau.

4. Procédé selon la revendication 3, caractérisé en ce que ladite matière colorante insoluble dans l'eau est un pigment, un colorant de dispersion ou un colorant à solvant.

5. Procédé selon la revendication 2, 3 où 4, caractérisé en ce que le support (6) est plongé dans un bain d'électrodéposition contenant une résine polymère et la première matière colorante pendant l'application d'une tension au premier groupe de couches électroconductrices (7), et plongé dans un autre bain d'électrodéposition contenant une résine polymère et la seconde matière colorante pendant l'application d'une tension au second groupe de couches électroconductrices (7).

6. Procédé selon la revendication 2, 3, 4 ou 5, caractérisé en ce que la solution contient une résine de polyester et une résine de mélamine.

7. Procédé selon la revendication 2, 3, 4 ou 5, caractérisé en ce que solution contient une résine acrylique et une résine de mélamine.

8. Procédé selon la revendication 2, 3, 4, 5, 6 ou 7, caractérisé en ce que le polymère déposé par électrolyse est durci après chaque électrodéposition et avant l'électrodéposition suivante.

9. Procédé selon la revendication 1, caractérisé en ce que chaque couche colorée (8) est formée par électrodéposition du polymère sur la couche électroconductrice (7) à partir d'une solution contenant le polymère et ensuite coloration du polymère électrodéposé dans une solution contenant un colorant.

10. Procédé selon la revendication 9, caractérisé en ce que le support (6) est plongé dans un bain d'électrodéposition contenant une résine de polymère pendant l'application d'une tension au premier groupe de couches électroconductrices (7), la couche de résine de polymère électrodéposée est teinte dans une première couleur, on applique une tension au second groupe de couches électroconductrices et la seconde couche de résine de polymère électrodéposée est colorée dans la seconde couleur différente de la première couleur.

11. Procédé selon la revendication 1, caractérisé en ce que chaque couche conductrice (7) est formée pratiquement d'oxyde d'étain ou d'oxyde d'indium et chaque couche colorée (8) est formée par dépôt anodique à partir d'une solution contenant un polymère chargé négativement.

12. Procédé selon la revendication 11, caractérisé en ce que le polymère chargé négativement est une résine de polyester, une résine acrylique ou une résine de mélamine.

13. Procédé pour la fabrication d'une dispositif d'affichage multichrome à partir d'un filtre multichrome fabriqué par un procédé selon l'une quelconque des revendications précédentes, dans lequel les couches électroconductrices forment un dessin d'électrodes d'affichage (7), caractérisé en ce que l'un forme une contreélectrode (9) sur une surface d'un second support (10) et on place une matière d'affichage (12) en sandwich entre ledit premier support (6) et ledit second support (10), ladite matière d'affichage (12) servant, en marche, d'obturateur à lumière commandé par la tension appliquée entre lesdites électrodes d'affichage et la contreélectrode.

14. Procédé selon la revendication 13, caractérisé en ce que ladite matière d'affichage (12) est une matière à cristaux liquides nématique en hélice du mode à effet de champ, ou une matière à cristaux liquides soluté-solvant du type négatif, ou une matière à cristaux liquides du mode à diffusion dynamique, ou une matière électrochroïque.

Fig. 1.

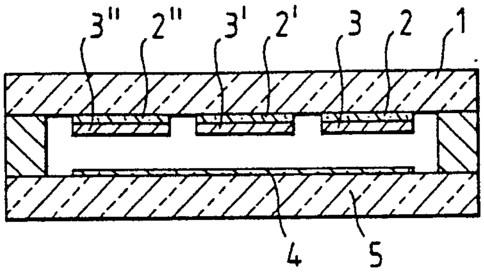


Fig. 2.

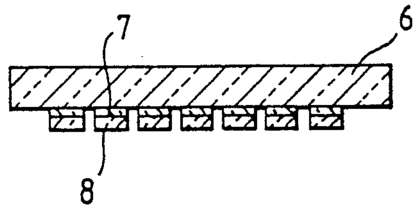


Fig. 3.